# EUROPEAN PATENT SPECIFICATION

(11) **EP 2 709 021 B1**
(45) Date of publication and mention of the grant of the patent: **19.08.2020**
(21) Application number: 13184256.9
(22) Date of filing: 13.09.2013
(51) Int. Cl.: G06F 15/02

(54) **Graph display control device, graph display control method and storage medium storing graph display control program**
Schaubild-Anzeigesteuervorrichtung, Schaubild-Anzeigesteuerverfahren und Speichermedium, dass das Schaubild-Anzeigesteuerprogramm speichert
Dispositif de contrôle d'affichage de graphiques, procédé de contrôle d'affichage de graphiques et support de stockage permettant de stocker le programme de contrôle d'affichage de graphiques

(30) Priority: 18.09.2012 JP 2012203818
(43) Date of publication of application: 19.03.2014
(73) Proprietor: CASIO COMPUTER CO., LTD., Shibuya-ku, Tokyo 151-8543 (JP)
(72) Inventor: Suzuki, Kentaro, Hamura-shi, Tokyo 205-8555 (JP)
(74) Representative: Grünecker Patent- und Rechtsanwälte PartG mbB

(56) References cited:
- Anonymous: "TI-nspire Getting Started with the TI-Nspire(TM) CX Handheld", , 16 March 2011 (2011-03-16), pages 1-114, XP055354850, Retrieved from the Internet: URL:https://www.usna.edu/MathDept/_files/d ocuments/resources/TI-Nspire_CX_Handheld_G ettingStarted_EN.pdf [retrieved on 2017-03-14]
- Dale Philbrick: "TI-Nspire(TM) Technology Version 3.0 Release Notes", , 15 March 2011 (2011-03-15), pages 1-23, XP055354663, Retrieved from the Internet: URL:https://education.ti.com/sites/US/down loads/pdf/TI-Nspire 3 0 Release Notes_EN.pdf [retrieved on 2017-03-14]
- Anonymous: "Exact values in graphs and geometry - Google Discussiegroepen", , 8 April 2011 (2011-04-08), pages 1-2, XP055354647, Retrieved from the Internet: URL:https://groups.google.com/forum/#!topi c/tinspire/048dqYWcDY8 [retrieved on 2017-03-14]
- Mccalla ET AL: "TI Nspire For Dummies", 2011, Wiley, Hoboken, NJ, USA, XP055354854, ISBN: 978-1-118-00466-1 pages 1-9, * the whole document *
- Anonymous: "First Steps with TI-nspire Technology for Teaching and Learning Mathematics Seven Introductory Tutorials for the TI-Nspire(TM) with Touchpad Handheld", , 1 January 2010 (2010-01-01), pages 1-54, XP055354855, Retrieved from the Internet: URL:https://education.ti.com/sites/UK/down loads/pdf/First_Steps_with_TI-Nspire_web.p df [retrieved on 2017-03-14]

## Description

### BACKGROUND OF THE INVENTION

### 1. Field of the Invention

The present invention relates to a graph display control device, a graph display control method, and a storage medium storing a graph display control program.

### 2. Description of the Related Art

Conventionally, a graph display device such as a graph scientific calculator includes a tracing function of a graph, and it is possible to move a cursor on a graph to display coordinates of the cursor (for example, see Japanese Patent Application Laid-Open Publication No. H8-179750). The graph display device described in the patent document is able to display a plurality of graphs simultaneously, and it is possible to switch to the graph to be traced.

In a graph showing functions, there is a point (hereinafter referred to as feature point) where coordinates may be represented as true values using "√", "π", and a fraction. It is very important when studying functions to understand such feature points. It is known from document: Getting started with the TI-Nspire™ CX Handheld, 2011, Texas Istruments Inc, and from document: TI-Nspire™ Technology Version 3.0 Release Notes, 2011, Texas Istruments, Dale Philbrick, a graph display device which allows for the display of coordinate values of a graph in form of true values.

However, in a conventional graph display device, when the xy coordinates of the cursor position is displayed on the graph, the value of the γ-coordinate is calculated from the x-coordinate of the cursor position, and the x-coordinate and the approximation of the y-coordinate (for example, value of 10 significant figures) are displayed. Therefore, even if it is possible to show the coordinates of the feature point as a true value using "√", "π", and a fraction, the feature point is not shown as a true value. Consequently, there is a problem that learning efficiency decreases.

### SUMMARY OF THE INVENTION

The present invention has been made in consideration of the above situation, and one of the main objects is to provide a graph display control device, a graph display control method, and a storage medium storing a graph display control program which are able to display coordinates of a point on a graph with a true value.

In order to achieve any one of the above advantages, according to an aspect of the present invention, there is provided a graph display control device including:
a display unit;
a function graph display control unit which sets a coordinate system with a plurality of variables to control display of a function graph of the plurality of variables on the display unit;
a point specifying unit which specifies an arbitrary point on the function graph as a specified point based on user operation;
a true value judging unit which judges whether it is possible to display at least one of the variables of a coordinate value of the specified point in a true value state;
a true value coordinate display control unit which controls display on the display unit to display at least one of the variables of the coordinate value in the true value state when the true value judging unit judges that at least one of the variables of the coordinate value can be displayed in the true value state; and
a coordinate value display control unit which controls display on the display unit to display at least one of the variables of the coordinate value as a value within predetermined digits when the true value judging unit judges that at least one of the variables of the coordinate value cannot be displayed in the true value state.

According to the present invention, it is possible to display coordinates of a point on a graph with a true value.

### BRIEF DESCRIPTION OF THE DRAWINGS

The present invention and the above-described objects, features and advantages thereof will become more fully understood from the following detailed description with the accompanying drawings and wherein;
FIG. 1 is a block diagram showing a functional configuration of a graph display device;
FIG. 2 is a flowchart showing a flow of graph display control processing;
FIG. 3A is a diagram showing a display content of a display;
FIG. 3B is a diagram showing a display content of a display;
FIG. 3C is a diagram showing a display content of a display;
FIG. 3D is a diagram showing a display content of a display;
FIG. 4A is a diagram showing a display content of a display;
FIG. 4B is a diagram showing a display content of a display;
FIG. 4C is a diagram showing a display content of a display;
FIG. 5A is a diagram showing a display content of a display;
FIG. 5B is a diagram showing a display content of a display;
FIG. 5C is a diagram showing a display content of a display;
FIG. 5D is a diagram showing a display content of a display;
FIG. 6A is a diagram showing a display content of a display;
FIG. 6B is a diagram showing a display content of a display; and
FIG. 6C is a diagram showing a display content of a display.

### DETAILED DESCRIPTION OF THE PREFERRED EMBODIMENT

An example of an embodiment of the present invention is described in detail with reference to the attached drawings. The scope of the invention is not limited to the illustrated examples.

### [Configuration]

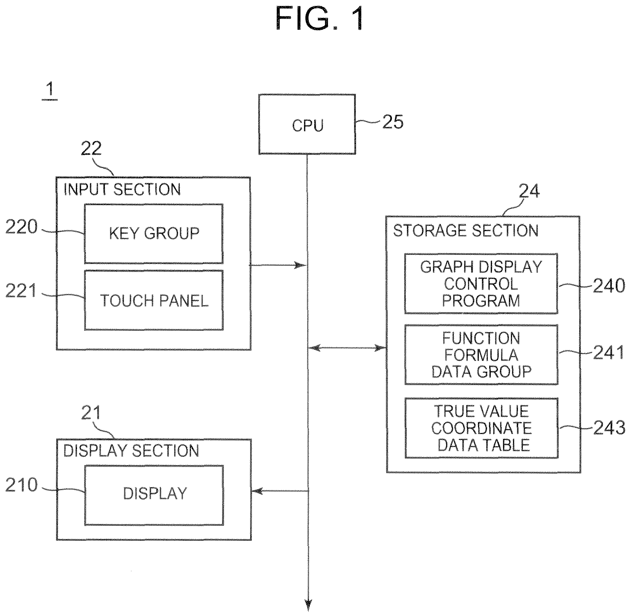

FIG. 1 is a block diagram showing a schematic configuration of a graph display device 1 of the present embodiment.

As shown in the drawings, the graph display device 1 of the present embodiment includes a display section 21, an input section 22, a storage section 24, a CPU 25, and the like.

The display section 21 includes a display 210, and various pieces of information are displayed on the display 210 based on display signals input from the CPU 25. The display 210 of the present embodiment is formed as one with a touch panel 221 and is able to receive touching operation by the user.

The input section 22 includes key group 220 and the above described touch panel 221. The input section 22 outputs to the CPU 25 signals corresponding to the type of touched key or the position pressed on the touch panel 221.

The storage section 24 is a memory which stores programs and data to execute various functions of the graph display device 1 and which functions as a work region of the CPU 25. According to the present embodiment, the storage section 24 stores a graph display control program 240, a function formula group 241, a true value coordinate data table 243, and the like, regarding the present invention.

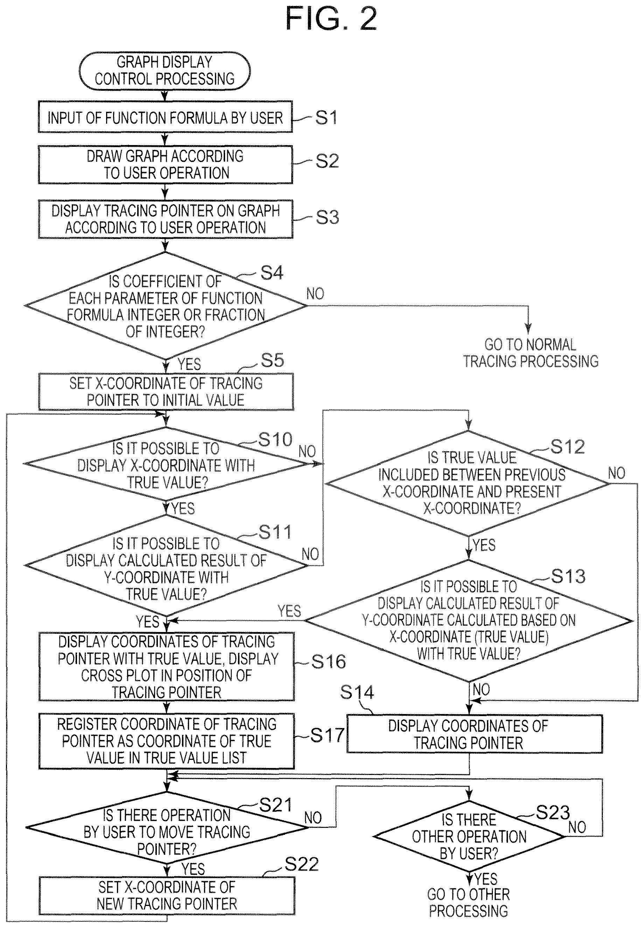

A graph display control program 240 is a program to allow the CPU 25 to perform a later described graph display control processing (see FIG. 2).

The function formula data group 241 includes a plurality of pieces of function formula data.

In the later described graph display control processing (see FIG. 2), coordinates which can be displayed in a true value state among the coordinates on the graph are accumulated and stored in the true value coordinate data table 243. Here, according to the present embodiment, "coordinates" are a pair of a value of a coordinate in an x-axis direction (hereinafter referred to as x-coordinate), and a value of a coordinate in a y-axis direction (hereinafter referred to as y-coordinate).

The CPU 25 centrally controls each section of the graph display device 1. Specifically, the CPU 25 expands programs specified from a system program stored in the storage section 24 and various application programs, and executes various processing in coordination with the expanded programs.

### [Graph Display Control Processing]

Next, the graph display control processing executed by the graph display device 1 is described with reference to FIG. 2.

FIG. 2 is a flowchart describing the operation of the graph display control processing. When the instruction to execute the graph display control processing is input through the input section 22 by the user, the graph display control program 240 is read out from the storage section 24 and suitably expanded. With this, the graph display control processing is performed by the CPU 25 in coordination with the graph display control program 240.

In the graph display control processing, as shown in the diagram, first, the CPU 25 inputs variables x, y for a function formula based on user operation (step S1). Then, the CPU 25 sets the coordinate system of the variables x, y in the display screen of the display 210 according to user operation to draw a graph of the function formula on the display 210 (step S2). The user in step S1 may select and input the function formula from the function formula data group 241 stored in the storage section 24.

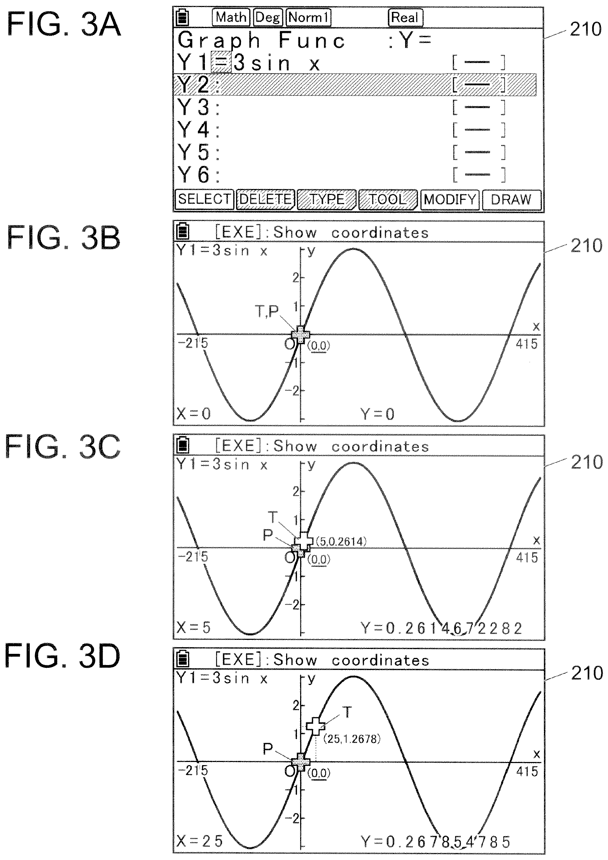

Next, the CPU 25 displays the tracing pointer T (see FIG. 3B) on the graph according to user operation (step S3).

Next, the CPU 25 judges whether the coefficient of each parameter in the function formula is an integer or a fraction of an integer (step S4), and when it is judged that the coefficient is neither (step S4; No), in other words, when the coefficient is more complicated, the processing advances to normal tracing processing.

In step S4, when it is judged that the coefficient of each parameter in the function formula is an integer or a fraction of an integer (step S4; Yes), the CPU 25 sets the x-coordinate of the tracing pointer T to an initial value (for example, x = 0) (step S5).

Next, the CPU 25 judges whether it is possible to display the x-coordinate in a true value state by using a radical root, a fraction, "π", etc. (step S10).

In step S10, when it is judged that it is possible to display the x-coordinate in a true value state (step S10; Yes), the CPU 25 specifies the point where the tracing pointer T is positioned as a specified point, assigns the x-coordinate of the tracing pointer T to the function formula to calculate the y-coordinate of the tracing pointer T, and judges whether it is possible to display the calculated result of the y-coordinate in the true value state by using a radical root, a fraction, "π", etc. (step S11). When it is judged that the above display is possible (step S11; Yes), the processing advances to the later described step S16.

When it is judged that it is not possible to display the x-coordinate in the true value state in step S10 (step S10; No), and it is judged that it is not possible to display the calculated result of the y-coordinate in the true value state in step S11 (step S11; No), the CPU 25 judges whether there is a point with an x-coordinate which can be displayed in the true value state using a radical root, a fraction, "π", etc. between the x-coordinate of the position of the tracing pointer T before moving, and the x-coordinate of the position of the tracing pointer T after moving (step S12).

In step S12, when it is judged that there is no point with an x-coordinate which can be displayed in the true value state (step S12; No), the CPU 25 specifies the point where the tracing pointer T is positioned at the present time as the specified point, assigns the x-coordinate in the function formula to calculate the y-coordinate of the tracing pointer T, and displays the coordinate of the tracing pointer T on the display 210 (step S14). Then, the processing advances to the later described step S21. In step S14, among the coordinates (x-coordinate, y-coordinate) of the tracing pointer T, the CPU 25 displays the coordinates which cannot be displayed in the true value state in each coordinate axis direction with a value of a rounded number within predetermined digits, in other words, as an approximate number.

In step S12, when it is judged that there is a point with an x-coordinate which can be displayed in the true value state (step S12; Yes), the CPU 25 specifies the point as the specified point, assigns the x-coordinate to the function formula to calculate the y-coordinate of the tracing point T, and judges whether it is possible to display the calculated result of the y-coordinate in a true value state by using a radical root, a fraction, "π", etc. (step S13).

In step S13, when it is judged that it is not possible to display the calculated result of the y-coordinate in the true value state (step S13; No), the CPU 25 advances the processing to the above described step S14.

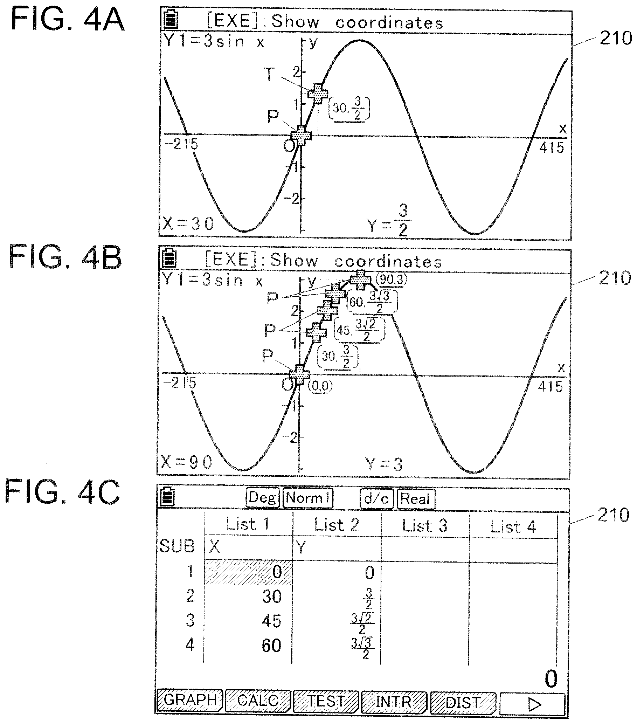

In step S13, when it is judged that it is possible to display the calculated result of the y-coordinate in the true value state (step S13; Yes), the CPU 25 displays on the display 210 the coordinates (x-coordinate, y-coordinate) of the tracing pointer T at the present time by using a radical root, a fraction, "π", etc. and displays a yellow plot P (see FIG. 3B, FIG. 4A) in a cross shape in a position of the tracing pointer T at the present time (step S16). The display state of the plot P and the coordinates of the plot P is maintained after the tracing pointer T moves. In step S16, the CPU 25 displays the coordinates in bold, red, underlined, etc. so that the coordinates can be displayed discriminated from the coordinates displayed in the above step S14. According to the present embodiment, when it is possible to display both the x-coordinate and the y-coordinate with the true values, both coordinate values are displayed with the true values. However, when it is possible to display only either one of the x-coordinate or the y-coordinate with the true value, only such coordinate is displayed with the true value, and the other is displayed with the value of the rounded number within predetermined digits.

Next, the CPU 25 stores the coordinates of the tracing pointer T at the present time as the coordinates of the true value in the true value coordinate data table 243 (step S17).

Next, the CPU 25 judges whether the operation to move the tracing pointer T is performed (step S21). When it is judged that the operation is performed (step S21; Yes), the x-coordinate of the tracing pointer T is increased or reduced a predetermined amount and reset to move the tracing pointer T on the graph (step S22), and the processing advances to the above described step S10.

In step S21, when it is judged that the operation to move the tracing pointer T is not performed (step S21; No), the CPU 25 judges whether other operation is performed (step S23).

In step S23, when it is judged that other operation is not performed (step S23; No), the CPU 25 advances the processing to the above described step S21, and when it is judged that other processing is performed (step S23; Yes), the processing advances to other processing according to the operation.

### [Operation Example]

Next, the operation of the above described graph display device 1 is described in detail with reference to the drawings.

### (Operation Example 1)

First, in a state where a display mode (degree mode or radian mode) of an angle in trigonometric function is set to degree mode, as shown in FIG. 3A, the user inputs the function formula "Y1 = 3sinx" in the graph display device 1 (step S1). Then, when the user performs a predetermined operation, as shown in FIG. 3B, the graph of the function formula is drawn on the display 210 (step S2), and the tracing pointer T is displayed on the graph (step S3). According to the present operation example, the function formula "Y1 = 3sinx" is synonymous to "Y = 3sinx" and the number "1" added to "Y1" on the left side shows the number of the function formula.

Next, the coefficients of each parameter "y" and "x" in the function formula "Y1 = 3sinx" (y = 3sinx) are judged to be integer "1" (step S4; Yes), and the x-coordinate of the tracing pointer T is set to an initial value of "0" (step S5).

Next, it is judged that it is possible to display the x-coordinate in the true value state (step S10; Yes), the x-coordinate "0" of the tracing pointer T is assigned to the function formula "Y1 = 3sinx" (y = 3sinx) to calculate the y-coordinate of the tracing pointer T, it is judged that it is possible to display the calculated result of the y-coordinate "0" in the true value state (step S11; Yes), and the coordinates of the tracing pointer T at the present time are displayed discriminated with an underline on the display 210 in the true value state (0, 0) and a yellow plot P in a cross shape is displayed in a position of the tracing pointer T at the present time (step S16). The display state of the plot P and the coordinates of the plot P (0, 0) is maintained after moving the tracing pointer T. The coordinates (0, 0) are stored in the true value coordinate data table 243 as the true value coordinates (step S17).

Next, when the user performs operation to move the tracing pointer T in the right direction (step S21; Yes), as shown in FIG. 3C, the x-coordinate of the tracing pointer T is increased a predetermined amount and reset to move the tracing pointer T in the right direction on the graph (step S22).

Next, it is judged that it is possible to display the x-coordinate "5" after movement in the true value state (step S10; Yes), the x-coordinate "5" of the tracing pointer T is assigned to the function formula "Y1 = 3sinx" (y = 3sinx) to calculate the y-coordinate of the tracing pointer T, and it is judged that it is not possible to display the calculated result of the y-coordinate "0.26..." in a true value state (step S11; No). Next, it is judged whether there is a point with an x-coordinate which can be displayed in the true value state between the x-coordinate of the position of the tracing pointer T before movement and the x-coordinate of the position after movement (step S12). According to the present operation example, after it is judged that there are no such points (step S12; No), the coordinates (5, 0.26...) of the tracing pointer T at the present time are displayed on the display 210 (step S14).

Next, similar to the above, when the user performs operation to move the tracing pointer T in the right direction (step S21; Yes), as shown in FIG. 3D, the x-coordinate of the tracing pointer T is increased a predetermined amount and reset to move the tracing pointer T in the right direction on the graph (step S22).

Next, it is judged that it is possible to display the x-coordinate "25" after movement in the true value state (step S10; Yes), the x-coordinate "25" of the tracing pointer T is assigned to the function formula "Y1 = 3sinx" (y = 3sinx) to calculate the y-coordinate of the tracing pointer T, and it is judged that it is not possible to display the calculated result of the y-coordinate "1.26..." in the true value state (step S11; No). Next, it is judged whether there is a point with an x-coordinate which can be displayed in the true value state between the x-coordinate of the position of the tracing pointer T before movement and the x-coordinate of the position after movement (step S12). According to the present operation example, after it is judged that there is no such point (step S12; No), the coordinates (5, 1.26...) of the tracing pointer T at the present time are displayed on the display 210 (step S14).

Next, similar to the above, when the user performs operation to move the tracing pointer T in the right direction (step S21; Yes), as shown in FIG. 4A, the x-coordinate of the tracing pointer T is increased a predetermined amount and reset to move the tracing pointer T in the right direction on the graph (step S22).

Next, it is judged that it is possible to display the x-coordinate "30" after movement in the true value state (step S10; Yes), the x-coordinate "30" of the tracing pointer T is assigned to the function formula "Y1 = 3sinx" (y = 3sinx) to calculate the y-coordinate of the tracing pointer T, and it is judged that it is possible to display the calculated result of the y-coordinate "1.5" in the true value state of "3/2" (step S11; Yes). The coordinates of the tracing pointer T at the present time are displayed discriminated with an underline in a true value state (30, 3/2) on the display 210, and the yellow plot P in a cross shape is displayed in the position of the tracing pointer at the present time (step S16). The display state of the plot P and the coordinates of the plot P (30, 3/2) are maintained after moving the tracing pointer T. The coordinates (30, 3/2) are stored in the true value coordinate data table 243 as the true value coordinates (step S17).

Hereinafter, when the user performs the operation of moving the tracing pointer T in the right direction similar to the above (step S21; Yes), as shown in FIG. 4B, plot P and the coordinates of the plot P are displayed in the position of coordinates (45, 3√2/2), (60, 3√3/2), (90, 3) (step S16). The above coordinates are stored in the true value coordinate data table 243 as the true value coordinates (step S17). Here, when the user performs operation to display the content of the true value coordinate data table 243, as shown in FIG. 4C, the coordinates stored in the true value coordinate data table 243 as the true value coordinates are displayed.

### (Operation Example 2)

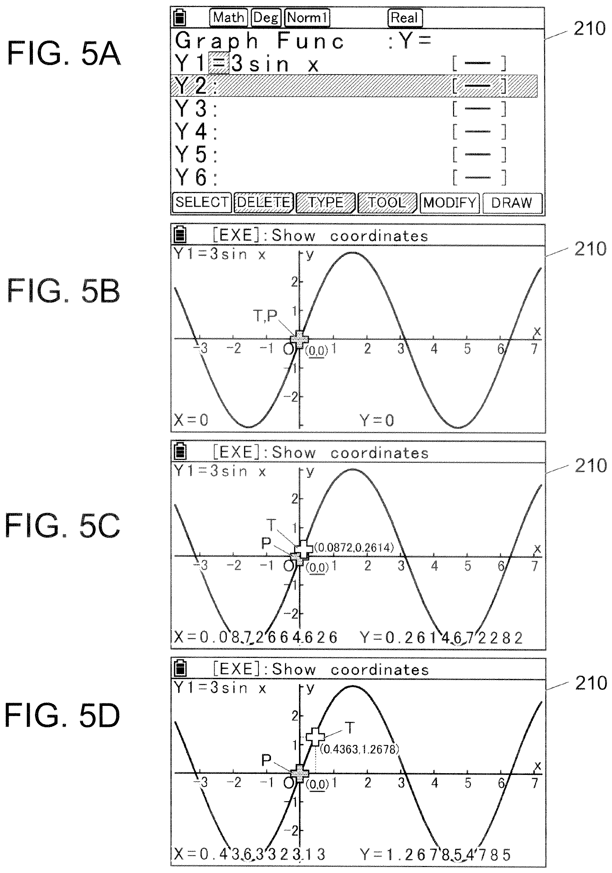

First, in a state where a display mode of an angle in trigonometric function is set to degree mode, as shown in FIG. 5A, the user inputs the function formula "Y1 = 3sinX" (y = 3sinX) in the graph display device 1 (step S1). Then, when the user performs a predetermined operation, as shown in FIG. 5B, the graph of the function formula is drawn on the display 210 (step S2), and the tracing pointer T is displayed on the graph (step S3).

Next, the coefficients of each parameter "y" and "x" in the function formula "Y1 = 3sinx" (y = 3sinx) are judged to be integer "1" (step S4; Yes), and the x-coordinate of the tracing pointer T is set to an initial value of "0" (step S5).

Next, it is judged that it is possible to display the x-coordinate in the true value state (step S10; Yes), the x-coordinate "0" of the tracing pointer T is assigned to the function formula "Y1 = 3sinx" (y = 3sinx) to calculate the y-coordinate of the tracing pointer T, it is judged that it is possible to display the calculated result of the y-coordinate "0" in the true value state (step S11; Yes), the coordinates of the tracing pointer T at the present time are displayed discriminated with an underline on the display 210 in the true value state (0, 0) and a yellow plot P in a cross shape is displayed in a position of the tracing pointer T at the present time (step S16). The display state of the plot P and the coordinates of the plot P (0, 0) is maintained after moving the tracing pointer T. The coordinates (0, 0) are stored in the true value coordinate data table 243 as the true value coordinates (step S17).

Next, when the user performs operation to move the tracing pointer T in the right direction (step S21; Yes), as shown in FIG. 5C, the x-coordinate of the tracing pointer T is increased a predetermined amount and reset to move the tracing pointer T in the right direction on the graph (step S22).

Next, it is judged that it is not possible to display the x-coordinate "0.087..." after movement in the true value state (step S10; No). Then, it is judged there are no points with an x-coordinate which can be displayed in the true value state between the x-coordinate of the position of the tracing pointer T before movement and the x-coordinate of the position after movement (step S12; No). The x-coordinate "0.087..." of the tracing pointer T at the present time is assigned to the function formula "Y1 = 3sinx" (y = 3sinx) to calculate the y-coordinate "0.26..." of the tracing pointer T, and then the coordinates (0.087..., 0.26...) of the tracing pointer T are displayed on the display 210 (step S14).

Next, similar to the above, when the user performs operation to move the tracing pointer T in the right direction (step S21; Yes), as shown in FIG. 5D, the x-coordinate of the tracing pointer T is increased a predetermined amount and reset to move the tracing pointer T in the right direction on the graph (step S22).

Next, it is judged that it is not possible to display the x-coordinate "0.43..." after movement in the true value state (step S10; No). Then, it is judged that there are no points with an x-coordinate which can be displayed in the true value state between the x-coordinate of the position of the tracing pointer T before movement and the x-coordinate of the position after movement (step S12; No). The x-coordinate "0.43..." of the tracing pointer T at the present time is assigned to the function formula "Y1 = 3sinx" (y = 3sinx) to calculate the γ-coordinate "1.26..." of the tracing pointer T. Then, the coordinates (0.43..., 1.26...) of the tracing pointer T at the present time are displayed on the display 210 (step S14).

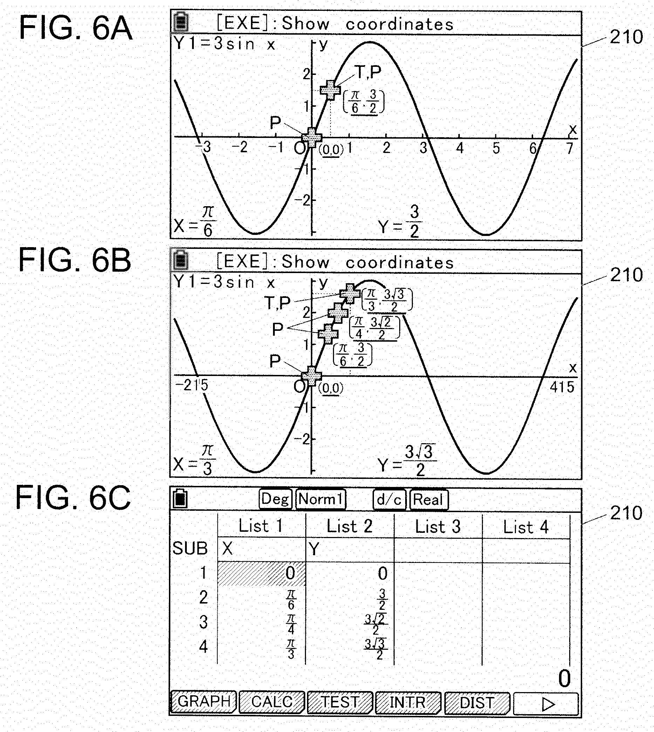

Next, similar to the above, when the user performs operation to move the tracing pointer T in the right direction (step S21; Yes), as shown in FIG. 6A, the x-coordinate of the tracing pointer T is increased a predetermined amount and reset to move the tracing pointer T in the right direction on the graph (step S22).

Next, it is judged that it is possible to display the x-coordinate "π/6" after movement in the true value state (step S10; Yes), the x-coordinate "π/6" of the tracing pointer T is assigned to the function formula "Y1 = 3sinx" (y = 3sinx) to calculate the y-coordinate of the tracing pointer T, and it is judged that it is possible to display the calculated result of the y-coordinate "1.5" in the true value state of "3/2" (step S11; Yes). The coordinates of the tracing pointer T at the present time are displayed discriminated with an underline in a true value state (π/6, 3/2) on the display 210, and the yellow plot P in a cross shape is displayed in the position of the tracing pointer T at the present time (step S16). The display state of the plot P and the coordinates of the plot P (π/6, 3/2) are maintained after moving the tracing pointer T. The coordinates (π/6, 3/2) are stored in the true value coordinate data table 243 as the true value coordinates (step S17).

Hereinafter, when the user performs the operation of moving the tracing pointer T in the right direction similar to the above (step S21; Yes), as shown in FIG. 6B, plot P and the coordinates of the plot P are displayed in the position of coordinates (π/4, 3√2/2) and (π/3, 3√3/2) (step S16). The above coordinates are stored in the true value coordinate data table 243 as the true value coordinates (step S17). Here, when the user performs operation to display the content of the true value coordinate data table 243, as shown in FIG. 6C, the coordinates stored in the true value coordinate data table 243 as the true value coordinates are displayed.

According to the above described embodiment, as shown in steps S10, S11, and S16 of FIG. 2 and FIG. 3A to FIG. 6C, when the point on the function graph is specified by the tracing pointer T as the specified point, it is judged whether it is possible to display the x-coordinate and the y-coordinate in the true value state using a formula including one or a plurality of a radical root, "π", and a fraction. When it is judged that it is possible to display the coordinates with the true value, the coordinates are displayed in the true value state using a formula including one or a plurality of a radical root, "π", and a fraction instead of the original displayed value of the rounded number. Therefore, it is possible to display the coordinates of the point on the graph with the true value.

As shown in steps S10, S21 of FIG. 2, when the tracing pointer T is moved in the x-axis direction on the function graph based on the user operation, if it is possible to display the x-coordinate of the tracing pointer T in the true value state, the point is specified as the specified point. Moreover, if the x-coordinate of the tracing pointer T after movement cannot be displayed in the true value state and there is a point with an x-coordinate which can be displayed in the true value state between the positions of the tracing pointer T before movement and after movement, the point is specified as the specified point. Therefore, it is possible to surely display the x-coordinate with the true value.

As shown in step S14 of FIG. 2, and FIG. 3A to FIG. 6C, unlike the coordinates displayed including the x-coordinate and/or y-coordinate in the approximate value state, the coordinates displayed in the true value state are displayed distinguished with an underline, etc. Therefore, it is easy to confirm the coordinates displayed in the true value state among the points on the graph.

As shown in step S16 of FIG. 2, and FIG. 3A to FIG. 6C, the plot P is displayed in the coordinate position where the coordinates in each coordinate axis direction are displayed in the true value state, and the display of the coordinates in each coordinate axis direction in the true value state in the plot P is maintained. Therefore, it is easy to confirm the coordinates displayed in the true value state among the points on the graph.

The detailed configuration and the detailed operation of each element of the graph display device 1 of the present embodiment can be changed without leaving the scope of the present invention.

For example, the graph display control device regarding the present invention is described as the graph display device 1, however the present invention is not limited to the products as described above. The present invention can be applied to various electronic devices such as a scientific calculator, an electronic dictionary, a cellular telephone, a personal computer, a PDA (Personal Digital Assistant), a game machine and the like. The graph display control program 240 of the present invention can be stored in a memory card, CD, etc. which can be attached to and detached from the graph display device 1.

The vertical axis of the coordinate system is described as the Y-axis and the horizontal axis of the coordinate system is described as the X-axis, however, other coordinate axis names can be used. The coordinate system is described as the orthogonal coordinate system, however other types of coordinate systems can be employed, for example, an oblique coordinate system, a polar coordinate system, and the like. Further, the number of coordinate axes in the coordinate system is described to be 2, however, the number can be 3 or more.

Although various exemplary embodiments have been shown and described, the invention is not limited to the embodiments shown. Therefore, the scope of the invention is intended to be limited solely by the scope of the claims that follow and its equivalents.

## Claims

1. A graph display control device comprising:
a display unit;
a function graph display control unit which sets a coordinate system with a plurality of variables to control display of a function graph of the plurality of variables on the display unit;
a point specifying unit which specifies an arbitrary point on the function graph as a specified point based on user operation;
a true value judging unit which judges whether it is possible to display at least one of the variables of a coordinate value of the specified point in a true value state;
a true value coordinate display control unit which controls display on the display unit to display at least one of the variables of the coordinate value in the true value state when the true value judging unit judges that at least one of the variables of the coordinate value can be displayed in the true value state; and
a coordinate value display control unit which controls display on the display unit to display at least one of the variables of the coordinate value as a value within predetermined digits when the true value judging unit judges that at least one of the variables of the coordinate value cannot be displayed in the true value state;
wherein a plurality of coordinate axes are set in directions different from each other in the coordinate system with the plurality of valuables,
the graph display control device further comprising,
a tracing pointer display control unit which controls display of a tracing pointer on the function graph,
wherein,
the point specifying section includes:
a tracing pointer moving unit which moves the tracing pointer on the function graph in a predetermined coordinate axis direction which is a coordinate axis direction of the variable of the coordinate system based on user operation; and
a tracing pointer point specifying unit which specifies a point of a coordinate as the specified point when it is possible to display a coordinate of the tracing pointer in the predetermined coordinate axis direction in the true value state,
wherein in a case where the tracing pointer is moved in the predetermined coordinate axis direction by the tracing pointer moving unit, when the coordinate of the tracing pointer in the predetermined coordinate axis direction after movement of the tracing pointer cannot be displayed in the true value state, and there is a point between the positions of the tracing pointer before and after movement where the coordinate in the predetermined coordinate axis direction can be displayed in the true value state, the tracing pointer point specifying unit specifies the point as the specified point.

2. The graph display control device according to claim 1, wherein,
the true value judging unit judges whether at least one of the variables of the coordinate value of a judging target can be displayed in the true value state using a formula including one or a plurality of a radical root, π, and a fraction; and
the true value coordinate display control unit controls display of at least one of the variables of the coordinate value in the true value state using the formula including one or the plurality of the radical root, π, and the fraction when the true value judging unit judges that it is possible to display at least one of the variables of the coordinate value in the true value state.

3. The graph display control device according to any one of claims 1 to 2, further comprising a true value coordinate display maintaining unit which controls display of a plot in a coordinate position where coordinates in both coordinate axis directions are displayed in the true value state by the true value coordinate display control unit, and which maintains display of the coordinates in the coordinate axis directions in the plot in the true value state.

4. A graph display control method of an electronic device including a display unit, the method comprising:
setting a coordinate system with a plurality of variables to control display of a function graph of the plurality of variables on the display unit;
specifying an arbitrary point on the function graph as a specified point based on user operation;
judging whether it is possible to display at least one of the variables of a coordinate value of the specified point in a true value state;
controlling display on the display unit to display at least one of the variables of the coordinate value in the true value state when it is judged that at least one of the variables of the coordinate value can be displayed in the true value state; and
controlling display on the display unit to display at least one of the variables of the coordinate value as a value within predetermined digits when it is judged that at least one of the variables of the coordinate value cannot be displayed in the true value state;
wherein a plurality of coordinate axes are set in directions different from each other in the coordinate system with the plurality of valuables, and further comprising
moving a tracing pointer on the function graph in a predetermined coordinate axis direction which is a coordinate axis direction of the variable of the coordinate system based on user operation; and
specifying a point of a coordinate as the specified point when it is possible to display a coordinate of the tracing pointer in the predetermined coordinate axis direction in the true value state,
wherein in a case where the tracing pointer is moved in the predetermined coordinate axis, when the coordinate of the tracing pointer in the predetermined coordinate axis direction after movement of the tracing pointer cannot be displayed in the true value state, and there is a point between the positions of the tracing pointer before and after movement where the coordinate in the predetermined coordinate axis direction can be displayed in the true value state, specifying the point as the specified point.

5. A computer-readable storage medium having a graph display control program stored thereon for controlling a computer including a display unit and a user operation unit, wherein Z when executed the program controls the computer to execute the steps of claim 4.

## Patentansprüche

1. Eine Graphenanzeigesteuerungsvorrichtung, die umfasst:
eine Anzeigeeinheit;
eine Funktionsgraphenanzeigesteuerungsvorrichtung, die ein Koordinatensystem mit mehreren Variablen zur Steuerung einer Anzeige eines Funktionsgraphen der mehreren Variablen auf der Anzeigeeinheit setzt;
eine Punktspezifizierungseinheit, die einen beliebigen Punkt auf dem Funktionsgraphen auf der Grundlage einer Nutzeroperation als einen spezifizierten Punkt spezifiziert;
eine Wahrer-Wert-Bestimmungseinheit, die bestimmt, ob es möglich ist, zumindest eine der Variablen eines Koordinatenwerts des spezifizierten Punkts in einem Wahrer-Wert-Zustand anzuzeigen;
eine Wahrer-Wert-Koordinatenanzeigesteuerungseinheit, die eine Anzeige auf der Anzeigeeinheit so steuert, dass sie zumindest eine der Variablen des Koordinatenwerts in dem Wahrer-Wert-Zustand anzeigt, wenn die Wahrer-Wert-Bestimmungseinheit bestimmt, dass zumindest eine der Variablen des Koordinatenwerts in dem Wahrer-Wert-Zustand angezeigt werden kann; und
eine Koordinatenwertanzeigesteuerungseinheit, die die eine Anzeige auf der Anzeigeeinheit so steuert, dass sie zumindest eine der Variablen des Koordinatenwerts als einen Wert innerhalb vorbestimmter Stellen anzeigt, wenn die Wahrer-Wert-Bestimmungseinheit bestimmt, dass zumindest eine der Variablen des Koordinatenwerts in dem Wahrer-Wert-Zustand nicht angezeigt werden kann;
wobei in dem Koordinatensystem mit den mehreren Variablen mehrere Koordinatenachsen in unterschiedlichen Richtungen zueinander gesetzt sind,
wobei die Graphenanzeigesteuerungsvorrichtung weiterhin umfasst
eine Tracing-Pointer-Anzeigesteuerungseinheit, die eine Anzeige eines Tracing-Pointers auf dem Funktionsgraphen steuert,
wobei
der Punktspezifizierungsabschnitt enthält:
eine Tracing-Pointer-Bewegungseinheit, die den Tracing-Pointer auf dem Funktionsgraphen in eine vorbestimmte Koordinatenachsenrichtung, die eine Koordinatenachsenrichtung der Variablen des Koordinatenachsensystems ist, auf der Grundlage einer Nutzeroperation bewegt; und
eine Tracing-Pointer-Spezifizierungseinheit, die einen Punkt einer Koordinate als den spezifizierten Punkt spezifiziert, wenn es möglich ist, eine Koordinate auf dem Tracer-Pointer in der vorbestimmten Koordinatenachsenrichtung in dem Wahrer-Wert-Zustand anzuzeigen,
wobei in einem Fall, in dem der Tracing-Pointer durch die Tracing-Pointer-Bewegungseinheit in die vorbestimmte Koordinatenachsenrichtung bewegt wird, wenn die Koordinate des Tracer-Pointers in der vorbestimmten Koordinatenachsenrichtung nach Bewegen des Tracer-Pointers in dem Wahrer-Wert-Zustand nicht angezeigt werden kann und es einen Punkt zwischen den Positionen des Tracer-Pointers vor und nach dem Bewegen gibt, in dem die Koordinate in der vorbestimmten Koordinatenachsenrichtung in dem Wahrer-Wert-Zustand angezeigt werden kann, die Tracing-Pointer-Spezifizierungseinheit den Punkt als den spezifizierten Punkt spezifiziert.

2. Die Graphenanzeigesteuerungsvorrichtung gemäß Anspruch 1, in der
die Wahrer-Wert-Bestimmungseinheit unter Verwendung einer Formel, die eines oder mehreres von einer Wurzel, π und einem Bruch enthält, bestimmt, ob zumindest eine der Variablen des Koordinatenwerts eines Bestimmungsziels in dem Wahrer-Wert-Zustand angezeigt werden kann; und
die Wahrer-Wert-Koordinatenanzeigesteuerungseinheit die Anzeige von zumindest einer der Variablen des Koordinatenwerts in dem Wahrer-Wert-Zustand unter Verwendung einer Formel steuert, die eines oder mehreres von der Wurzel, π und dem Bruch enthält, wenn die Wahrer-Wert-Bestimmungseinheit bestimmt, dass es möglich ist, zumindest eine der Variablen des Koordinatenwerts in dem Wahrer-Wert-Zustand anzuzeigen.

3. Die Graphenanzeigesteuerungsvorrichtung gemäß Anspruch 1 oder 2, die weiterhin eine Wahrer-Wert-Koordinatenanzeigebeibehaltungseinheit umfasst, die eine Anzeige eines Plots an einer Koordinatenposition, in der Koordinaten in beiden Koordinatenachsenrichtungen durch die Wahrer-Wert-Koordinatenanzeigesteuerungseinheit in dem Wahrer-Wert-Zustand angezeigt werden, steuert, und die die Anzeige der Koordinaten in den Koordinatenachsenrichtungen in dem Plot in dem Wahrer-Wert-Zustand beibehält.

4. Ein Graphenanzeigesteuerungsverfahren einer elektronischen Vorrichtung mit einer Anzeigeeinheit, wobei das Verfahren umfasst:
Setzen eines Koordinatensystems mit mehreren Variablen zur Steuerung einer Anzeige eines Funktionsgraphen der mehreren Variablen auf der Anzeigeeinheit;
Spezifizieren eines beliebigen Punkts auf dem Funktionsgraphen als einen spezifizierten Punkt auf der Grundlage einer Nutzeroperation;
Bestimmen davon, ob es möglich ist, zumindest eine der Variablen eines Koordinatenwerts des spezifizierten Punkts in einem Wahrer-Wert-Zustand anzuzeigen;
Steuern einer Anzeige auf der Anzeigeeinheit, sodass sie zumindest eine der Variablen des Koordinatenwerts in dem Wahrer-Wert-Zustand anzeigt, wenn bestimmt wird, dass zumindest eine der Variablen des Koordinatenwerts in dem Wahrer-Wert-Zustand angezeigt werden kann; und
Steuern einer Anzeige auf der Anzeigeeinheit, sodass sie zumindest eine der Variablen des Koordinatenwerts als einen Wert innerhalb vorbestimmter Stellen anzeigt, wenn bestimmt wird, dass zumindest eine der Variablen des Koordinatenwerts in dem Wahrer-Wert-Zustand nicht angezeigt werden kann;
wobei in dem Koordinatensystem mit den mehreren Variablen mehrere Koordinatenachsen in unterschiedlichen Richtungen zueinander gesetzt sind, und weiterhin umfassend
Bewegen eines Tracing-Pointers auf dem Funktionsgraphen in eine vorbestimmte Koordinatenachsenrichtung, die eine Koordinatenachsenrichtung der Variablen des Koordinatenachsensystems ist, auf der Grundlage einer Nutzeroperation; und
Spezifizieren eines Punkts einer Koordinate als den spezifizierten Punkt, wenn es möglich ist, eine Koordinate auf dem Tracer-Pointer in der vorbestimmten Koordinatenachsenrichtung in dem Wahrer-Wert-Zustand anzuzeigen,
in einem Fall, in dem der Tracing-Pointer in die vorbestimmte Koordinatenachsenrichtung bewegt wird, wenn die Koordinate des Tracer-Pointers in der vorbestimmten Koordinatenachsenrichtung nach Bewegen des Tracer-Pointers in dem Wahrer-Wert-Zustand nicht angezeigt werden kann und es einen Punkt zwischen den Positionen des Tracer-Pointers vor und nach dem Bewegen gibt, in dem die Koordinate in der vorbestimmten Koordinatenachsenrichtung in dem Wahrer-Wert-Zustand angezeigt werden kann, Spezifizieren des Punkts als den spezifizierten Punkt.

5. Ein computerlesbares Speichermedium mit einem darauf gespeicherten Graphenanzeigesteuerungsprogramm zum Steuern eines Computers mit einer Anzeigeeinheit einer Nutzeroperationseinheit, wobei das Programm, wenn es ausgeführt wird, den Computer dahingehend steuert, die Schritte von Anspruch 4 auszuführen.

## Revendications

1. Dispositif de commande d'affichage de graphique comprenant :
une unité d'affichage ;
une unité de commande d'affichage de graphique de fonction qui établit un système de coordonnées avec une pluralité de variables pour commander un affichage d'un graphique de fonction de la pluralité de variables sur l'unité d'affichage ;
une unité de spécification de point qui spécifie un point arbitraire sur le graphique de fonction en tant que point spécifié sur la base d'une opération utilisateur ;
une unité de jugement de valeur vraie qui juge s'il est possible d'afficher au moins une des variables d'une valeur de coordonnées du point spécifié dans un état de valeur vraie ;
une unité de commande d'affichage de coordonnées de valeur vraie qui commande un affichage sur l'unité d'affichage pour afficher au moins une des variables de la valeur de coordonnées dans l'état de valeur vraie lorsque l'unité de jugement de valeur vraie juge qu'au moins une des variables de la valeur de coordonnées peut être affichée dans l'état de valeur vraie ; et
une unité de commande d'affichage de valeur de coordonnées qui commande l'affichage sur l'unité d'affichage pour afficher au moins une des variables de la valeur de coordonnées en tant que valeur entre des chiffres prédéterminés lorsque l'unité de jugement de valeur vraie juge qu'au moins une des variables de la valeur de coordonnées ne peut pas être affichée dans l'état de valeur vraie ;
dans lequel une pluralité d'axes de coordonnées sont établis dans des directions différentes les unes des autres dans le système de coordonnées avec la pluralité de variables,
le dispositif de commande d'affichage de graphique comprenant en outre,
une unité de commande d'affichage de pointeur de suivi qui commande un affichage d'un pointeur de suivi sur le graphique de fonction,
dans lequel,
la section de spécification de point comprend :
une unité de déplacement de pointeur de suivi qui déplace le pointeur de suivi sur le graphique de fonction dans une direction d'axe de coordonnées prédéterminée qui est une direction d'axe de coordonnées de la variable du système de coordonnées sur la base d'une opération utilisateur ; et
une unité de spécification de point de pointeur de suivi qui spécifie un point d'une coordonnée en tant que point spécifié lorsqu'il est possible d'afficher une coordonnée du pointeur de suivi dans la direction d'axe de coordonnées prédéterminée dans l'état de valeur vraie,
dans lequel dans le cas où le pointeur de suivi est déplacé dans la direction d'axe de coordonnées prédéterminée par l'unité de déplacement de pointeur de suivi, lorsque la coordonnée du pointeur de suivi dans la direction d'axe de coordonnées prédéterminée après le déplacement du pointeur de suivi ne peut pas être affichée dans l'état de valeur vraie, et il existe un point entre les positions du pointeur de suivi avant et après déplacement où la coordonnée dans la direction d'axe de coordonnées prédéterminée peut être affichée dans l'état de valeur vraie, l'unité de spécification de point de pointeur de suivi spécifie le point en tant que point spécifié.

2. Dispositif de commande d'affichage de graphique selon la revendication 1, dans lequel,
l'unité de jugement de valeur vraie juge si au moins une des variables de la valeur de coordonnées d'une cible de jugement peut être affichée dans l'état de valeur vraie en utilisant une formule comprenant une ou une pluralité d'une racine radicale, π, et d'une fraction ; et
l'unité de commande d'affichage de coordonnées de valeur vraie commande l'affichage d'au moins une des variables de la valeur de coordonnées dans l'état de valeur vraie en utilisant la formule comprenant une ou la pluralité de la racine radicale, π, et de la fraction lorsque l'unité de jugement de valeur vraie juge qu'il est possible d'afficher au moins une des variables de la valeur de coordonnées dans l'état de valeur vraie.

3. Dispositif de commande d'affichage de graphique selon l'une quelconque des revendications 1 à 2, comprenant en outre une unité de maintien d'affichage de coordonnées de valeur vraie qui commande l'affichage d'un tracé dans une position de coordonnées où des coordonnées dans les deux directions d'axe de coordonnées sont affichées dans l'état de valeur vraie par l'unité de commande d'affichage de coordonnées de valeur vraie, et qui maintient l'affichage des coordonnées dans les directions d'axe de coordonnées dans le tracé dans l'état de valeur vraie.

4. Procédé de commande d'affichage de graphique d'un dispositif électronique comprenant une unité d'affichage, le procédé comprenant les étapes consistant à :
établir un système de coordonnées avec une pluralité de variables pour commander l'affichage d'un graphique de fonction de la pluralité de variables sur l'unité d'affichage ;
spécifier un point arbitraire sur le graphique de fonction en tant que point spécifié sur la base d'une opération utilisateur ;
juger s'il est possible d'afficher au moins une des variables d'une valeur de coordonnées du point spécifié dans un état de valeur vraie ;
commander l'affichage sur l'unité d'affichage pour afficher au moins une des variables de la valeur de coordonnées dans l'état de valeur vraie lorsqu'il est jugé que la au moins une des variables de la valeur de coordonnées peut être affichée dans l'état de valeur vraie ; et
commander l'affichage sur l'unité d'affichage pour afficher au moins une des variables de la valeur de coordonnées en tant que valeur entre des chiffres prédéterminés lorsqu'il est jugé qu'au moins une des variables de la valeur de coordonnées ne peut pas être affichée dans l'état de valeur vraie ;
dans lequel une pluralité d'axes de coordonnées sont établis dans des directions différentes les unes des autres dans le système de coordonnées avec la pluralité de variables, et comprenant en outre
le déplacement d'un pointeur de suivi sur le graphique de fonction dans une direction d'axe de coordonnées prédéterminée qui est une direction d'axe de coordonnées de la variable du système de coordonnées sur la base de l'opération utilisateur ; et
la spécification d'un point d'une coordonnée en tant que point spécifié lorsqu'il est possible d'afficher une coordonnée du pointeur de suivi dans la direction d'axe de coordonnées prédéterminée dans l'état de valeur vraie,
dans lequel dans un cas où le pointeur de suivi est déplacé dans l'axe de coordonnées prédéterminé, lorsque la coordonnée du pointeur de suivi dans la direction d'axe de coordonnées prédéterminée après le déplacement du pointeur de suivi ne peut pas être affichée dans l'état de valeur vraie, et il existe un point entre les positions du pointeur de suivi avant et après déplacement où la coordonnée dans la direction d'axe de coordonnées prédéterminée peut être affichée dans l'état de valeur vraie, la spécification du point en tant que point spécifié.

5. Support de stockage lisible par ordinateur sur lequel est stocké un programme de commande d'affichage de graphique pour commander un ordinateur comprenant une unité d'affichage et une unité d'opération utilisateur, dans lequel lorsqu'il est exécuté, le programme commande l'ordinateur pour exécuter les étapes de la revendication 4.
